# NEUE EUROPÄISCHE PATENTSCHRIFT

(11) **EP 4 150 279 B2**
(45) Veröffentlichungstag und Bekanntmachung des Hinweises auf die Entscheidung über den Einspruch: **10.06.2026**
(45) Hinweis auf die Patenterteilung: 20.09.2023
(21) Anmeldenummer: 21715569.6
(22) Anmeldetag: 26.03.2021
(51) Int. Cl.: F27D 3/16, C22B 9/05, C22B 15/00, C22B 21/06, F27D 27/00

(54) **GASINJEKTIONSVORRICHTUNG**
GAS INJECTION DEVICE
DISPOSITIF D'INJECTION DE GAZ

(30) Priorität: 14.05.2020 DE 102020206078; 01.12.2020 DE 102020215085
(43) Veröffentlichungstag der Anmeldung: 22.03.2023
(73) Patentinhaber: SMS group GmbH, 41069 Mönchengladbach (DE)
(72) Erfinder: SCHÜRING, Andreas, 45475 Mülheim (DE); BOROWSKI, Nikolaus Peter Kurt, 40489 Düsseldorf (DE)
(74) Vertreter: Kross, Ulrich
(86) Internationale Anmeldenummer: PCT/EP2021/057957
(87) Internationale Veröffentlichungsnummer: WO 2021/228464

(56) Entgegenhaltungen:
- EP-A1- 2 341 155
- EP-A1- 3 363 919
- WO-A1-99/41420
- CN-A- 105 486 091
- DE-A1- 2 136 743
- DE-B- 1 015 609
- DE-B- 1 015 609
- DE-B1- 2 528 672
- DE-B1- 2 528 672
- US-A- 4 296 921
- "Continuous Casting : Proceedings of the International Conference on Continuous Casting of Non-Ferrous Metals", 26 November 2005, WILEY-VCH VERLAG GMBH & CO. KGAA , Weinheim, Germany , ISBN: 978-3-527-31341-9, article B. FRIEDRICH, C. KRäUTLEIN, K. KRONE: "Melt Treatment of Copper and Aluminium - The Complex Step Before Casting : Proceedings of the International Conference on Continuous Casting of Non-Ferrous Metals", pages: 1 - 22, XP055483642, DOI: 10.1002/9783527607969.ch1

## Beschreibung

Die vorliegende Erfindung betrifft eine Gasinjektionsvorrichtung zum Einbringen eines Prozessgases in eine Nichteisen-Metallschmelze und/oder Schlacke, insbesondere eine Kupferschmelze und/oder Kupferschlacke. In einem weiteren Aspekt betrifft die vorliegende Erfindung eine Anlage zur Gewinnung von Nichteisen-Metallen, insbesondere von Kupfer, sowie eine Anlage zur Aufbereitung, Reinigung und/oder Raffination von Nichteisen-Metallschlacken, insbesondere von Kupferschlacken umfassend die erfindungsgemäße Gasinjektionsvorrichtung. Weiterhin betrifft die vorliegende Erfindung die Verwendung der erfindungsgemäßen Gasinjektionsvorrichtung zur Gewinnung von Nichteisen-Metallen, insbesondere von Kupfer, oder zur Aufbereitung, Reinigung und/oder Raffination von Nichteisen-Metallschlacken, insbesondere von Kupferschlacken.

Derartige Vorrichtungen sind im Stand der Technik grundsätzlich bekannt und bestehen im Wesentlichen aus einem Stahlrohr, das an seinem einem Ende mehrere Auslässe zum Einbringen eines Gases in eine Metallschmelze aufweist. Das Stahlrohr ist typischerweise mit einer feuerfesten Schutzschicht ummantelt und somit gegen die Metallschmelze geschützt.

So offenbart beispielsweise die DE 27 09 155 eine Lanze für eine Spülgasbehandlung von Nichteisen-Metallschmelzen mit einem inerten Gas. Die Lanze besteht aus einem Stahlrohr, an deren einem Ende ein Lanzenkopf aus einem gasdurchlässigen Sintermetall angeschweißt ist. Das Stahlrohr sowie der Lanzenkopf sind mit einer keramischen Schutzschicht auf Emailbasis überzogen.

Das deutsche Gebrauchsmuster DE 20 2007 013 385 U1 offenbart eine Rührvorrichtung für eine Aluminiumlegierung mit einer Hohlwelle, an deren einem Ende ein Rotor aus Graphit lösbar angeordnet ist. Die Hohlwelle besteht aus einem Stahlrohr, welches eine Graphitummantelung aufweist.

Aus der US 2017/0176106 A1 ist eine weitere Spülvorrichtung für eine Spülgasbehandlung von Metallschmelzen mit einem inerten Gas bekannt. Die Spülvorrichtung umfasst eine Motorwelle aus Stahl, eine Impellerwelle sowie einen mit der Impellerwelle verbundenen Impeller. Die Impellerwelle als auch der Impeller sind aus Graphit gefertigt und mit einem keramischen Material imprägniert.

Die europäische Patentanmeldung EP 3 363 919 A1 beschreibt ein Verfahren zum Herstellen von Wasserstoff-armen Kupfer in einem Schmelzofen. Hierbei wird in die Kupferschmelze ein rotierender Impeller eingetaucht, durch welchen ein inertes Spülgas, wie beispielsweise Stickstoff, in die Kupferschmelze eingebracht und verteilt wird. Der Impeller kann aus einer Keramik, aus Graphit oder einer Keramik-Graphit-Mischung bestehen. Weitere Lanzen werden in der DE 25 28 672 A1 und in der DE 10 15 609 B beschrieben.

Im Prozess sind die Lanzen durch Eintauchen in die Metallschmelze bzw. Herausziehen aus der Metallschmelze hohen Temperaturgradienten ausgesetzt. So wird die Lanze beim Eintauchen schlagartig erwärmt, beim Herausziehen hingegen schlagartig abgekühlt. Aufgrund der unterschiedlichen Wärmedehnungskoeffizienten der jeweiligen Materialien, aus denen die Lanzen bestehen, kommt es daher im Laufe der Zeit zu einer Rissbildung, die sich nachteilig auf die Standzeit derartiger Lanzen auswirkt.

Vor diesem Hintergrund liegt der vorliegenden Erfindung daher die Aufgabe zu Grunde eine gegenüber dem Stand der Technik verbesserte Gasinjektionsvorrichtung zum Einbringen eines Prozessgases in eine Nichteisen-Metallschmelze, insbesondere eine Kupferschmelze, anzugeben. Gemäß einem weiteren Aspekt liegt der vorliegenden Erfindung die Aufgabe zu Grunde eine verbesserte Anlage, insbesondere eine Anlage zur Gewinnung von Nichteisen-Metallen, insbesondere von Kupfer, sowie eine Anlage zur Aufbereitung, Reinigung und/oder Raffination von Nichteisen-Metallschlacken, insbesondere von Kupferschlacken, bereitzustellen. Erfindungsgemäß wird die Aufgabe durch eine Gasinjektionsvorrichtung mit den Merkmalen des Patentanspruchs 1, 3, 6, eine Anlage mit den Merkmalen des Patentanspruchs 10, sowie einer Verwendung einer Gasinjektionsvorrichtung mit den Merkmalen des Patentanspruchs 12 gelöst.

Die erfindungsgemäße Gasinjektionsvorrichtung ist zum Einbringen eines Prozessgases, wie beispielsweise eines sauerstoffhaltigen Gases oder von Erdgas, in eine Nichteisen-Metallschmelze und/oder eine Schlacke, insbesondere in eine Kupferschmelze und/oder Kupferschlacke, vorgesehen. Die Gasinjektionsvorrichtung umfasst eine hohlzylindrische Lanze, die aus einem feuerfesten Werkstoff und/oder Graphit besteht, wobei die Lanze eine Einlassöffnung für das Prozessgas sowie ein mit der hohlzylindrischen Lanze verbundenes und aus einem feuerfesten Werkstoff und/oder Graphit bestehendes Gasinjektionsmodul aufweist. Das aus einem feuerfesten Werkstoff und/oder Graphit bestehende Gasinjektionsmodul weist zumindest eine Auslassöffnung für das Prozessgas auf, wobei die Auslassöffnung zumindest ein aus einem keramischen Material gebildetes durchströmbares Element umfasst, über das das Prozessgas in die Schmelze einbringbar ist.

Der vorliegenden Erfindung liegt die wesentliche Erkenntnis zu Grunde, dass durch den gezielten Einsatz eines feuerfesten Werkstoffes und/oder von Graphit in Kombination mit einem keramischen Material eine Gasinjektionsvorrichtung herstellbar ist, die eine geringe Empfindlichkeit gegenüber Temperaturschocks aufweist. Diese geringe Empfindlichkeit gegenüber den Temperaturschocks, denen eine Gasinjektionsvorrichtung im Prozess durch Eintauchen in die Metallschmelze bzw. Herausziehen aus der Metallschmelze ausgesetzt ist, basiert darauf, dass beide Materialien ähnliche Wärmedehnungskoeffizienten aufweisen. Hierdurch kann die Wärmerissbildung signifikant reduziert werden, was zu einer verbesserten Standzeit derartiger Gasinjektionsvorrichtungen führt.

Der gezielte Einsatz einer Keramik für das vom Prozessgas durchströmbare Element wirkt sich besonders vorteilhaft aus, da der Abbrand des feuerfesten Werkstoffes und/oder des Graphits, der bei der Verwendung von Prozessgasen mit einem hohen Sauerstoffanteil und den sehr hohen Temperaturen der Metallschmelze unweigerlich auftritt, reduziert werden kann.

Durch die Verwendung von feuerfesten Werkstoffen und/oder von Graphit als Material für die Lanze als auch für das Gasinjektionsmodul kann zudem auf den Einsatz von Stahlbauteilen weitestgehend verzichtet werden. Dies ist besonders dann vorteilhaft, wenn die Nichteisen-Metallschmelze eine Kupferschmelze und/oder eine Kupferschlacke ist. Da Kupfer gegenüber Eisen in Bezug auf sein Redoxpotential hochwertiger ist, würde der Einsatz von Stahlbauteilen dazu führen, dass das Eisen, bei Kontakt der Lanze mit der oxidhaltigen Kupferschmelze, verschlackt und somit die Lanze zerstört.

Vorteilhafterweise weist das Graphit besonders positive Eigenschaft auf, da es eine geringe Benetzbarkeit besitzt. Anhaftungen der einfrierenden Metallschmelze können somit wirksam reduziert werden.

Das zumindest eine aus dem keramischen Material gebildete durchströmbare Element, welches in der Auslassöffnung des Gasinjektionsmoduls angeordnet ist, kann mittels unterschiedlicher Verbindungstechniken mit diesem fest verbunden werden. So kann das Element vorzugsweise mittels einer Pressverbindung, mittels einer Schraubverbindung und/oder einer Klebeverbindung mit dem Gasinjektionsmodul verbunden werden. In einer besonders vorteilhaften Ausführungsvariante kann ein solches Element in eine feuerfeste Werkstoffmasse eingegossen werden.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das keramische Material ist erfindungsgemäß ausgewählt aus der Gruppe umfassend Siliziumkarbide, Siliziumnitride, Silizium-Aluminiumoxid-Nitride, Bornitride, Zirkonoxide, Titanoxide und/oder Mischungen hiervon. Ganz besonders bevorzugt ist das keramische Material ausgewählt aus der Gruppe umfassend Al₂O₃, MgO, SiO₂, SiC, CaO, FeO, Fe₂O₃, Fe₃O₄, ZrO₂, TiO₂, BN, Cr₂O₃, ggf. weiterhin umfassend alkalische Bestandteile und/oder Eisennadeln und/oder Mischungen hiervon. Bei dem keramischen Material kann es sich auch um ein keramisches Matrixmaterial handeln, das aus eine Mischung aus den Oxiden ausgewählt aus der Reihe umfassend Al₂O₃, MgO, SiO₂, SiC, CaO, FeO, Fe₂O₃, Fe₃O₄, ZrO₂, TiO₂, BN, Cr₂O₃, alkalischen Bestandteilen und Eisennadeln gebildet ist.

Unter dem Begriff "feuerfester Werkstoff" werden im Sinne der vorliegenden Erfindung keramische Erzeugnisse, wie anorganische nichtmetallische Materialien, verstanden, die einen Erweichungspunkt von mindestens 1500 °C aufweisen, wobei der Erweichungspunkt mit einem Segerkegel nach DIN 51063 bestimmt wird. Die Hauptkomponenten dieser anorganischen nichtmetallischen Materialien können zumindest eines oder mehrere der Oxide ausgewählt aus der Reihe umfassend Siliziumdioxid, Aluminiumoxid, Magnesiumoxid, Calciumoxid, Zirkoniumoxid, Chromoxid und/oder Mischungen hiervon aufweisen. Zudem können Kohlenstoff (C) und Siliziumcarbid (SiC) weitere Komponenten dieser anorganischen nichtmetallischen Materialien bilden.

Bevorzugt ist daher vorgesehen, dass der feuerfeste Werkstoff ausgewählt ist aus einem oder mehrere der Oxide ausgewählt aus der Reihe umfassend Siliziumdioxid, Aluminiumoxid, Magnesiumoxid, Calciumoxid, Zirkoniumoxid, Chromoxid und/oder Mischungen hiervon, ggf. in Kombination Kohlenstoff (C) und/oder Siliziumcarbid (SiC).

In einer besonders bevorzugten Ausführungsvariante ist der feuerfeste Werkstoff ausgewählt aus der Reihe umfassend Al₂TiO₅, SiC, Si₃N₄, ZrO und/oder ZrO₂.

Um in Bezug auf die jeweils benötige Länge der hohlzylindrischen Lanze eine Flexibilität zu haben, ist diese vorteilhafterweise aus mehreren einzelnen, miteinander verbindbaren, hohlzylindrischen Lanzenkörpern gebildet. Zum Verbinden der einzelnen Lanzenkörper weisen diese beispielsweise konische Gewinde auf, über die sie miteinander verschraubt werden können.

In einer ersten erfindungsgemäßen Ausführungsvariante ist das Gasinjektionsmodul topfförmig ausgebildet, wobei die zumindest eine, vorzugsweise mehreren Auslassöffnungen in einer Mantelfläche des topfförmig ausgebildeten Gasinjektionsmoduls angeordnet sind. Das aus der Keramik gebildete durchströmbare Element ist erfindungsgemäß in Form einer Düse ausgebildet ist, die in die zumindest eine Auslassöffnung eingesetzt und mit dem Gasinjektionsmodul fest verbunden ist. Die aus dem keramischen Material gebildete Düse kann beispielsweise eingegossen, mittels einer Pressverbindung und/oder einer Klebeverbindung mit dem Gasinjektionsmodul verbunden werden. Ggf. kann auch eine Schraubverbindung vorgesehen werden. Hierzu umfasst die Düse ein Außengewinde und die Auslassöffnung ein entsprechendes Gegengewinde, in das die Düse sodann einschraubbar ist.

Durch die modulare Bauweise können die aus dem keramischen Material gebildeten Düsen - geometrieseitig - spezifisch auf die gewünschten Gasdrücke und - Volumenströme konfiguriert und hergestellt werden.

In Abhängigkeit des Düsentyps kann der zur Verfügung stehende Druck und Volumenstrom optimal auf die flüssige Nichteisen-Metallschmelze und/oder Schlacke umgesetzt werden. Grundsätzlich gilt hierbei, dass je höher der zur Verfügung stehende Druck ist, eine umso höhere Ausströmgeschwindigkeit bzw. ein umso größerer Impuls umsetzbar ist. Daher können durch die hohen Ausströmgeschwindigkeiten bzw. durch den großen Impuls hohe Badeindringtiefen und somit starke Badbewegungen erzeugt werden, die zum Kollabieren von großen Prozessgasblasen und somit zur Bildung vieler kleiner Prozessgasblasen führen. Diese kleinen Prozessgasblasen können sich besonders gut in der Nichteisen-Metallschmelze verteilen und weisen eine große Oberfläche auf. Das in die Nichteisen-Metallschmelze und/oder Schlacke einzubringende Prozessgas kann daher effektiver umgesetzt werden.

Die Düse ist in der zumindest einen Auslassöffnung erfindungsgemäß derart angeordnet, dass ihre Längsachse einen Winkel von 45° bis 80° in Bezug auf die Längsachse der Lanze, vorzugsweise einen Winkel von 60° bis 80° in Bezug auf die Längsachse der Lanze, aufweist. Die Düse kann somit horizontal oder in Richtung des distalen Endes der Lanze geneigt angeordnet sein. Die geneigte Ausführungsvariante wirkt sich besonders vorteilhaft auf die mögliche Badeindringtiefe aus.

Ein besonders hoher Wirkungsgrad wird erzielt, wenn die Düse als Lavaldüse ausgebildet ist. Mittels einer Lavaldüse sind kleinstmögliche Prozessgasblasen in der Nichteisen-Metallschmelze und/oder der Schlacke realisierbar. Der höhere Wirkungsgrad wirkt sich dabei besonders vorteilhaft auf die Prozesskosten aus.

In einer zweiten erfindungsgemäßen Ausführungsvariante ist das Gasinjektionsmodul in Form eines Brausekopfs ausgebildet und weist mehrere in Richtung der Einlassöffnung der Lanze ausgerichtete Auslassöffnungen auf. In diesem Zusammenhang ist besonders bevorzugt vorgesehen, dass das aus dem keramischen Material gebildete durchströmbare Element in Form einer Lochplatte oder einer porösen Platte ausgebildet ist, die in die jeweiligen Auslassöffnungen des Brausekopfs eingesetzt und mit diesem fest verbunden sind.

Die mehreren Auslassöffnungen können in einer Kreislinie oder alternativ quadratisch angeordnet sein.

Die aus dem keramischen Material gebildete Lochplatte oder die poröse Platte kann beispielsweise in dem feuerfesten Werkstoff eingegossen sein. Alternativ und/oder ergänzend kann die aus dem keramischen Material gebildete Lochplatte oder die poröse Platte mittels einer Pressverbindung, einer Schraubverbindung, einer Bolzenverbindung und/oder durch Einkleben mit dem Gasinjektionsmodul verbunden werden. Vorteilhafterweise ist jedoch ein Eingießen der aus dem keramischen Material gebildeten Lochplatte oder der porösen Platte vorgesehen. Hierzu umfasst die Lochplatte oder die poröse Platte einen Absatz,-der in das Gasinjektionsmodul eingegossen ist. Durch diesen Absatz kann zum einen eine Gasdichtigkeit erzielt und zum anderen Kräfte, resultierend aus dem inneren Gasdruck und/oder dem metallostatischen Druck der flüssigen Metall/Schlackensäule über dem Modul, von der Lochplatte oder der porösen Platte in das Gasinjektionsmodul übertragen werden.

Die in Richtung der Lanze ausgerichteten Auslassöffnungen sind vorzugsweise derart angeordnet, dass ihre Längsachse einen Winkel von 0° bis 45° in Bezug auf die Längsachse der Lanze, vorzugsweise einen Winkel von 3° bis 15° in Bezug auf die Längsachse der Lanze aufweist.

Diese Ausführungsvariante ist besonders dann vorteilhaft, wenn der zur Verfügung stehende Druck begrenzt ist. Hierbei muss lediglich der Druck am Austritt der Öffnungen der Lochplatte bzw. der porösen Platte höher als der metallostatische Druck der darüber befindlichen Nichteisen-Metallschmelze und/oder Schlacke sein. Die Größe der Öffnungen gibt die Größe der Prozessgasblasen vor. Vorzugsweise ist daher vorgesehen, dass die Vielzahl der Öffnungen der Lochplatte, durch die das Prozessgas in die Nichteisen-Metallschmelze und/oder Schlacke injizierbar ist, derart dimensioniert sind, dass kleinstmögliche Prozessgasblasen in der Metallschmelze und/oder Schlacke entstehen.

Durch einen ausreichenden Abstand der einzelnen Öffnungen zueinander kann zudem ein Vereinigen der Prozessgasblasen an der Oberseite der Lochplatte verhindert werden. Bevorzugt ist die Lochplatte daher derart konfiguriert, dass der Abstand einer Öffnung zur nächstbenachbarten Öffnung mindestens das 3-fache, mehr bevorzugt mindestens das 5-fache des Öffnungsdurchmessers beträgt. Der hierdurch erzeugte aufsteigende Gasblasenvorhang führt zudem zu einer geringen turbulenten Badbewegung an der Oberfläche der Metallschmelze.

In einer dritten erfindungsgemäßen Ausführungsvariante ist das Gasinjektionsmodul in Form eines Impellerrads ausgebildet, wobei die zumindest eine Auslassöffnung zentrisch in dem Impellerrad angeordnet ist. Das Impellerrad ermöglicht zum einen eine besonders effektive Durchmischung der Nichteisen-Metallschmelze und/oder Schlacke und zum anderen eine feine Verteilung des in die Metallschmelze und/oder in die Schlacke eingeleiteten Prozessgases.

Gemäß einer ersten Ausführungsvariante ist das aus dem keramischen Material gebildete durchströmbare Element in Form einer einseitig verschlossenen Hülse ausgebildet, die in die zumindest eine Auslassöffnung des Impellerrads eingesetzt und mit diesem fest verbunden ist, wobei die Hülse zumindest ein, vorzugsweise mehrere senkrecht zu ihrer Längsachse angeordnete Auslasskanäle aufweist, über die das Prozessgas in die Schmelze einbringbar ist. Über den Durchmesser der Auslasskanäle kann die Größe der Prozessgasblasen vorgegeben werden, die an der Unterseite des rotierenden Impellerrads austreten. Durch die Rotation des Impellerrads können die einzelnen Gasblasen zerschlagen und radial in der Nichteisen-Metallschmelze verteilt werden. Die Verteilung ist hierdurch großflächiger möglich als bei einer herkömmlichen Düse und/oder Lanze. Unabhängig von der Einleitung eines Prozessgases und der durch die aufsteigenden Gasblasen erzeugten Strömung, können die in der Schmelze enthaltenen Blasen allein durch die Rotation des Impellerrades weiter verteilt werden, sodass eine breite Verteilung der Prozessgasblasen in der Nichteisen-Metallschmelze und/oder Schlacke ermöglicht wird.

Gemäß einer zweiten Ausführungsvariante ist das aus dem keramischen Material gebildete durchströmbare Element in Form einer beidseitig geöffneten, zylindrischen Hülse ausgebildet, die in die zumindest eine Auslassöffnung eingesetzt und mit dem Impellerrad, beispielsweise mittels einer Pressverbindung oder einer Schraubverbindung, fest verbunden ist. Bei dieser Ausführungsvariante tritt das Prozessgas in Form von größeren Prozessgasblasen aus und wird sodann durch die Rotation des Impellerrads in kleinere Prozessgasblasen zerschlagen.

Die aus dem keramischen Material gebildete Hülse kann beispielsweise mittels einer Pressverbindung oder einer Klebeverbindung mit dem Gasinjektionsmodul verbunden werden. Vorteilhafterweise ist jedoch eine Eingießen der Hülse vorgesehen.

Gemäß einem zweiten Aspekt betrifft die Erfindung eine Anlage zu Gewinnung von Nichteisen-Metallen, insbesondere von Kupfer, umfassend die erfindungsgemäße Gasinjektionsvorrichtung.

Gemäß einem dritten Aspekt betrifft die Erfindung eine Anlage zur Aufbereitung, Reinigung und/oder Raffination von Nichteisen-Metallschlacken, insbesondere von Kupferschlacken, umfassend die erfindungsgemäße Gasinjektionsvorrichtung.

Gemäß einem vierten Aspekt betrifft die vorliegende Erfindung zudem die Verwendung der erfindungsgemäßen Gasinjektionsvorrichtung zur Gewinnung von Nichteisen-Metallen, insbesondere von Kupfer, oder zur Aufbereitung, Reinigung und/oder Raffination von Nichteisen-Metallschlacken, insbesondere von Kupferschlacken.

Weiterhin kann die Gasinjektionsvorrichtung eine Antriebswelle umfassen, die mit einem Motor verbunden ist. Vorzugsweise kann auch die Antriebswelle aus einem feuerfesten Werkstoff und/oder Graphit gebildet sein, besonders bevorzugt besteht diese aus dem feuerfesten Werkstoff und/oder Graphit. Die Gasinjektionsvorrichtung kann sodann an der Antriebswelle angegossen sein, so dass durch die Verwendung der entsprechenden Materialien besonders beanspruchte Bereiche der Gasinjektionsvorrichtung widerstandfähiger ausgeführt werden können.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: eine erste Ausführungsvariante der erfindungsgemäßen Gasinjektionsvorrichtung,
- Fig. 2: eine Querschnittsdarstellung der in Figur 1 gezeigten Ausführungsvariante gemäß Schnittebene A-A,
- Fig. 3: eine Detailansicht des unteren Teils der Gasinjektionsvorrichtung gemäß erster Ausführungsvariante,
- Fig. 4: eine Detailansicht des unteren Teils der Gasinjektionsvorrichtung gemäß einer zweiten Ausführungsvariante,
- Fig. 5: eine dritte Ausführungsvariante der erfindungsgemäßen Gasinjektionsvorrichtung in einer Schnittdarstellung,
- Fig. 6: die in Figur 5 gezeigte dritte Ausführungsvariante in einer Draufsicht,
- Fig. 7: eine vierte Ausführungsvariante der erfindungsgemäßen Gasinjektionsvorrichtung in einer Draufsicht,
- Fig. 8: eine Ausführungsvariante einer Lochplatte in einer Draufsicht,
- Fig. 9: die in Figur 8 gezeigte Ausführungsvariante der Lochplatte in einer Querschnittsdarstellung gemäß Schnittebene A-A,
- Fig. 10: eine fünfte Ausführungsvariante der erfindungsgemäßen Gasinjektionsvorrichtung,
- Fig. 11: die in Figur 10 gezeigte fünfte Ausführungsvariante in einer Draufsicht, und
- Fig. 12: eine sechste Ausführungsvariante der erfindungsgemäßen Gasinjektionsvorrichtung.

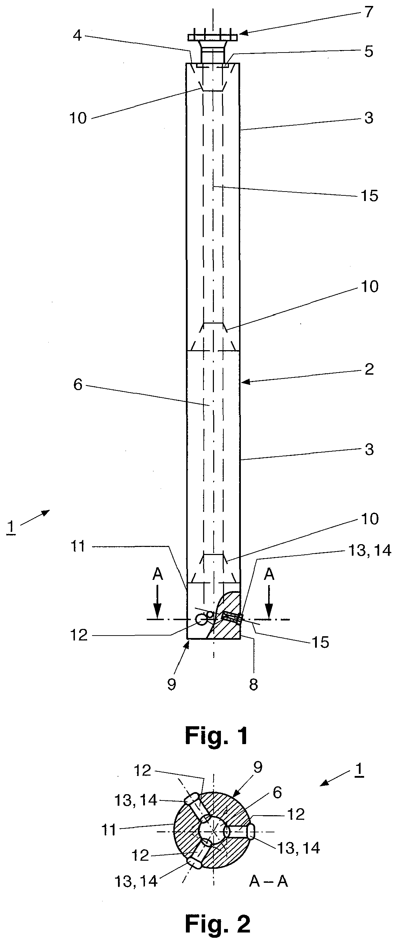

Figur 1 zeigt eine erste Ausführungsvariante der erfindungsgemäßen Gasinjektionsvorrichtung 1. Die erfindungsgemäße Gasinjektionsvorrichtung 1 ist zum Einbringen eines Prozessgases, wie beispielsweise eines sauerstoffhaltigen Gases oder von Erdgas, in eine Nichteisen-Metallschmelze und/oder Schlacke, insbesondere in eine Kupferschmelze und/oder Kupferschlacke, vorgesehen.

Die Gasinjektionsvorrichtung 1 umfasst eine hohlzylindrische Lanze 2, die aus einem feuerfesten Werkstoff, vorzugsweise aus Al₂TiO₅ oder SiC, mehr bevorzugt aus Si₃N₄, und am meisten bevorzugt aus ZrO oder ZrO₂ besteht und in der vorliegenden Ausführungsvariante aus zwei einzelnen Lanzenkörpern 3 gebildet ist. An einem ersten distalen Ende 4 der Lanze 2 ist eine Einlassöffnung 5 für das Prozessgas vorgesehen, die in einem Hauptkanal 6 der Lanze 2 mündet. Für den Anschluss der Gasinjektionsvorrichtung 1 an eine Prozessgasleitung (nicht dargestellt) weist diese vorliegend ein Verbindungsstück 7 auf. An dem zum ersten distalen Ende 4 axial gegenüberliegenden Ende 8 weist die Gasinjektionsvorrichtung 1 ein mit der hohlzylindrischen Lanze 2 verbundenes und ebenfalls aus einem feuerfesten Hochleistungswerkstoff, vorzugsweise aus Al₂TiO₅ oder SiC, mehr bevorzugt aus Si₃N₄, und am meisten bevorzugt aus ZrO oder ZrO₂ bestehendes Gasinjektionsmodul 9 auf. Die einzelnen Module 3, 7 sind dabei über Schraubverbindungen miteinander verbunden.

Wie anhand der in Figur 1 dargestellten Ausführungsvariante erkennbar, ist das Gasinjektionsmodul 9 topfförmig ausgebildet und weist drei in seiner Mantelfläche 11 angeordnete Auslassöffnungen 12 auf, über die das Prozessgas in die Nichteisen-Metallschmelze und/oder Schlacke einbringbar ist. In jeder der Auslassöffnungen 12 ist jeweils ein aus einem keramischen Material gebildetes durchströmbares Element 13 angeordnet, welches vorliegend in Form einer Düse 14, insbesondere einer Lavaldüse 14 ausgebildet ist.

In einer alternativ Ausführungsvariante (nicht dargestellt) kann das topfförmig ausgebildete Gasinjektionsmodul 9 einteilig mit dem Lanzenkörper 3 ausgebildet sein, so dass beide Module 3, 9 aus einem einzigen Element gebildet werden.

In Figur 2 ist eine Querschnittsdarstellung der in Figur 1 gezeigten Ausführungsvariante gemäß Schnittebene A-A gezeigt. Erkennbar sind hierbei insbesondere die drei Auslassöffnungen 12, die in der Mantelfläche 11 des Gasinjektionsmoduls 9 in einem gleichen Abstand zueinander angeordnet sind und sich von dem Hauptkanal 6 radial erstrecken.

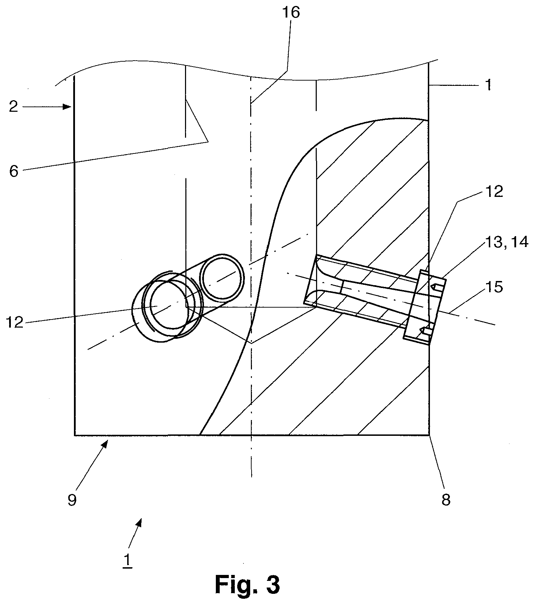

Figur 3 zeigt eine Detailansicht des unteren Teils der Gasinjektionsvorrichtung 1 gemäß der zuvor erläuterten Ausführungsvariante, bei der jede der Lavaldüsen 14 mittels einer Pressverbindung mit dem Gasinjektionsmodul 1 fest verbunden ist. Alternativ kann jede der Lavaldüsen 14 mittels eines Hochtemperaturklebers geklebt oder in die Gasinjektionsvorrichtung 1 eingegossen werden. Wie weiterhin anhand der Darstellung der Figur 3 erkennbar, ist jede der kanalartigen Auslassöffnungen 12 in Richtung des zweiten distalen Endes 8 der Lanze 2 geneigt. Mit anderen Worten, weist die Längsachse 15 jeder der kanalartigen Auslassöffnungen 12 bzw. jeder der Lavaldüsen 14 einen Winkel in Bezug auf die Längsachse 16 der Lanze 2 auf, der in der vorliegenden Ausführungsvariante 75° beträgt.

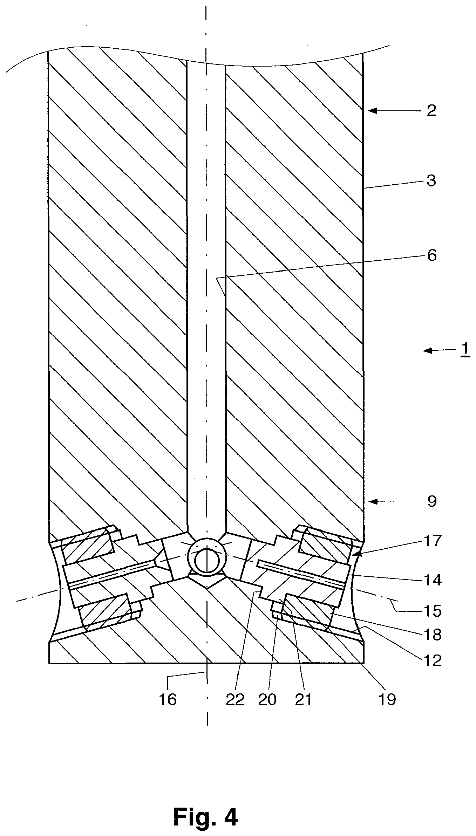

In Figur 4 ist ein unterer Abschnitt einer zweiten Ausführungsvariante der erfindungsgemäßen Gasinjektionsvorrichtung 1 gezeigt. Das Gasinjektionsmodul 9 ist vorliegend mit dem Lanzenkörper 3 der Lanze 2 einteilig ausgebildet. Im Unterschied zu der vorhergehenden Ausführungsvariante sind die Lavaldüsen 14 mittels einer Schraubverbindung 17 mit dem Gasinjektionsmodul 9 bzw. dem Lanzenkörper 3 der Lanze 2 fixiert. Die Schraubverbindung 17 umfasst eine aus dem feuerfesten Werkstoff bestehende Mutter 18 mit einem Außengewinde 19, die in die Auslassöffnung 12, die ein Gegengewinde 20 aufweist, einschraubbar ist. Wie anhand der Figur 4 erkennbar, umfasst die Lavaldüse 14 einen Flansch 21, über den die Mutter 18 die Lavaldüse 14 gegen eine Anschlagsfläche 22 der Auslassöffnung 12 fixiert. Alternativ kann die aus dem feuerfesten Werkstoff bestehende Mutter 18 in die Auslassöffnung 12 des Gasinjektionsmoduls 9 mittels eines Hochtemperaturklebstoffs eingeklebt oder alternativ eingegossen werden.

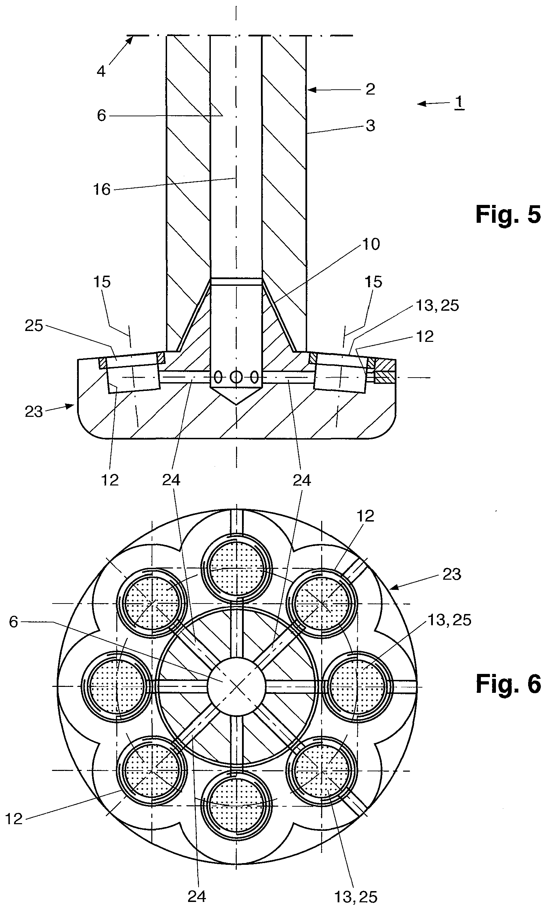

Eine weitere vorteilhafte Ausführungsvariante der erfindungsgemäßen Gasinjektionsvorrichtung 1 ist in Figur 5 dargestellt. Das Gasinjektionsmodul ist hierbei in Form eines Brausekopfs 23 ausgebildet, welches mehrere in einer Kreislinie angeordnete und in Richtung des ersten distalen Endes 4 der Gasinjektionsvorrichtung 1 ausgerichtete Auslassöffnungen 12 aufweist. Jede der Auslassöffnungen 12 kommuniziert hierbei über einen Kanal 24 mit dem Hauptkanal 6 der Lanze 2. Wie anhand der Figur 5 erkennbar, sind die Auslassöffnungen 12 in Bezug auf die Längsachse 16 der Lanze 2 leicht geneigt. Ihre Längsachse 15 weist einen Winkel von 5° in Bezug auf die Längsachse 16 der Lanze 2 auf. Das aus dem keramischen Material gebildete durchströmbare Element 13 ist vorliegend in Form einer Lochplatte 25 ausgebildet, die in die jeweiligen Auslassöffnungen 12 des Brausekopfs 23 eingesetzt und mit diesem über eine hochtemperaturfeste Klebeverbindung fest verbunden ist. Alternativ und/oder ergänzend kann diese in die Gasinjektionsvorrichtung 1 eingegossen werden.

Figur 6 zeigt die in Figur 5 gezeigte Ausführungsvariante aus der Draufsicht. Erkennbar ist hierbei die Mehrzahl der Auslassöffnungen 12, die entlang einer Kreislinie in gleichem Abstand zueinander angeordnet sind.

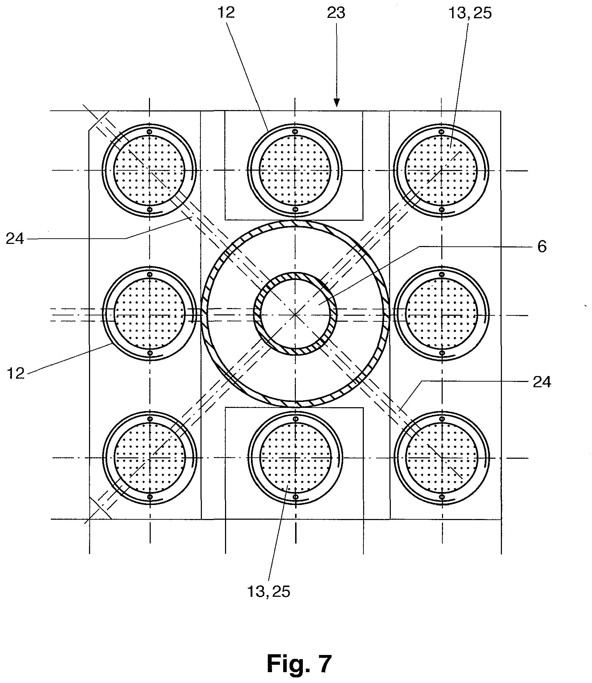

Figur 7 zeigte eine vierte Ausführungsvariante der erfindungsgemäßen Gasinjektionsvorrichtung 1 in einer Draufsicht. Im Unterschied zu der Ausführungsvariante gemäß Figur 5 und 6 ist der Brausekopf 23 quadratisch ausgebildet, wobei die Mehrzahl der Auslassöffnungen 12 entlang einer viereckförmigen Umfangslinie angeordnet sind.

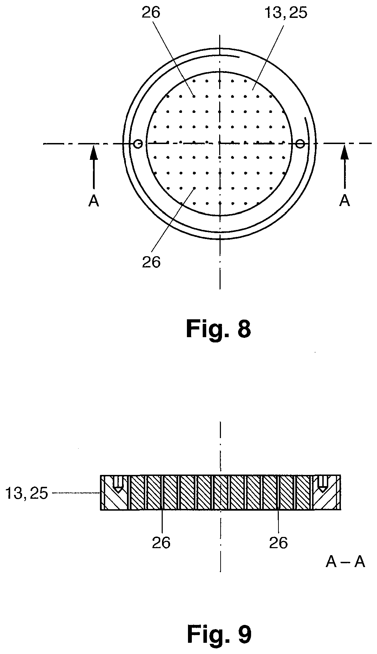

In den Figuren 8 und 9 ist das in Form der Lochplatte 25 ausgebildete durchströmbare Element 13 in einer Draufsicht gezeigt. Anhand der beiden Darstellungen sind die einzelnen Öffnungen 26 der Lochplatte 25 erkennbar, durch die das Prozessgas in die Nichteisen-Metallschmelze und/oder die Schlacke injizierbar ist. Der Abstand der Öffnungen 26 untereinander beträgt in der vorliegend dargestellten Ausführungsvariante das 5-fache des Öffnungsdurchmessers der Öffnung 26.

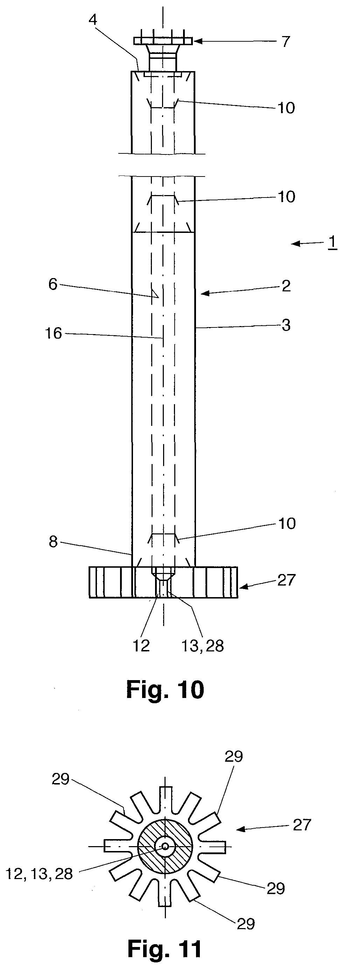

In Figur 10 ist eine weitere Ausführungsvariante der erfindungsgemäßen Gasinjektionsvorrichtung 1 gezeigt. Das Gasinjektionsmodul ist hierbei in Form eines Impellerrads 27 ausgebildet, welches eine zentrisch angeordnete Auslassöffnung 12 umfasst. Das aus dem keramischen Material gebildete durchströmbare Element 13 ist in Form einer zylindrischen und beidseitig offenen Hülse 28 ausgebildet, die in die Auslassöffnung 12 eingesetzt und mit dem Impellerrad 27 über eine Pressverbindung fest verbunden ist.

Figur 11 zeigt die in Figur 10 gezeigte Ausführungsvariante der Gasinjektionsvorrichtung 1 aus der Draufsicht anhand derer die einzelnen Impeller 29 des Impellerrads 27 erkennbar sind.

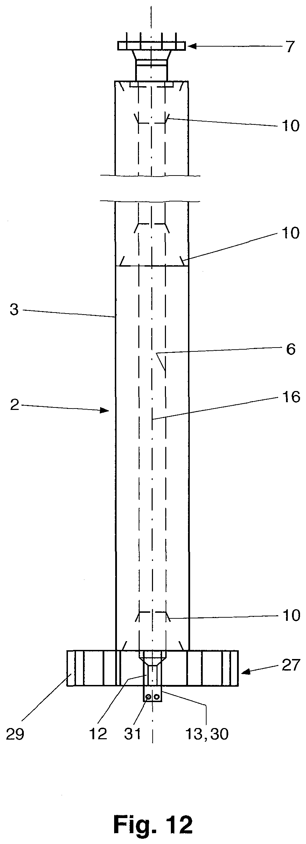

In Figur 12 ist eine weitere Ausführungsvariante der erfindungsgemäßen Gasinjektionsvorrichtung 1 gezeigt. Im Unterschied zu der in den Figuren 10 und 11 gezeigten und erläuterten Ausführungsvariante ist das aus dem keramischen Material gebildete durchströmbare Element 13 in Form einer einseitig verschlossenen Hülse 30 ausgebildet und in die zentrische Auslassöffnung 12 des Impellerrads 27 eingeklebt. Die Hülse 30 bildet hierbei einen Vorsprung an der Unterseite des Impellerrads 27 aus und weist mehrere senkrecht zu ihrer Längsachse angeordnete Auslasskanäle 31 auf, über die das Prozessgas in die Nichteisen-Metallschmelze und/oder Schlacke einbringbar ist.

### Bezugszeichenliste

- 1: Gasinjektionsvorrichtung
- 2: Lanze
- 3: Lanzenkörper
- 4: erstes distales Ende
- 5: Einlassöffnung
- 6: Hauptkanal
- 7: Verbindungsstück
- 8: zweites distales Ende
- 9: Gasinjektionsmodul
- 10: Schraubverbindung
- 11: Mantelfläche
- 12: Auslassöffnungen
- 13: Element
- 14: Düse / Lavaldüse
- 15: Längsachse der Auslassöffnung
- 16: Längsachse der Lanze
- 17: Schraubverbindung
- 18: Mutter
- 19: Außengewinde
- 20: Gegengewinde
- 21: Flansch
- 22: Anschlagsfläche
- 23: Gasinjektionsmodul / Brausekopf
- 24: Kanal
- 25: Lochplatte
- 26: Öffnungen
- 27: Gasinjektionsmodul / Impellerrad
- 28: Hülse
- 29: Impeller
- 30: Hülse
- 31: Auslasskanäle

## Patentansprüche

1. Gasinjektionsvorrichtung (1) zum Einbringen eines Prozessgases in eine Nichteisen-Metallschmelze und/oder Schlacke, insbesondere eine Kupferschmelze und/oder Kupferschlacke, umfassend eine hohlzylindrische Lanze (2), die aus einem feuerfesten Werkstoff und/oder Graphit besteht, wobei die Lanze (2) eine Einlassöffnung (5) für das Prozessgas und ein mit der hohlzylindrischen Lanze (2) verbundenes sowie ein aus einem feuerfesten Werkstoff und/oder Graphit bestehendes Gasinjektionsmodul (9, 23, 27) mit zumindest einer Auslassöffnung (12) für das Prozessgas aufweist, wobei die Auslassöffnung (12) zumindest ein aus einem keramischen Material gebildetes durchströmbares Element (13) umfasst, über das das Prozessgas in die Schmelze einbringbar ist, wobei das keramische Material ausgewählt ist aus der Gruppe umfassend Siliziumcarbide, Siliziumnitride, Silizium-Aluminiumoxid-Nitride, Bornitride, Zirkonoxide, Titanoxide, Aluminiumtitanate und/oder Mischungen hiervon, wobei das Gasinjektionsmodul (9) topfförmig ausgebildet und die zumindest eine, vorzugsweise mehreren Auslassöffnungen (12) in einer Mantelfläche (11) des topfförmig ausgebildeten Gasinjektionsmoduls (9) angeordnet sind, wobei das aus dem keramischen Material gebildete durchströmbare Element (13) in Form einer Düse (14) ausgebildet ist, die in die zumindest eine Auslassöffnung (12) eingesetzt und mit dem Gasinjektionsmodul (9) fest verbunden ist, und wobei die Düse (14) in der zumindest einen Auslassöffnung (12) derart angeordnet ist, dass ihre Längsachse (15) einen Winkel von 45° bis 80°, bevorzugt einen Winkel von 60° bis 80° in Bezug auf die Längsachse (16) der Lanze (2) aufweist.

2. Gasinjektionsvorrichtung (1) nach Anspruch 1, wobei die Düse (14) als Lavaldüse (14) ausgebildet ist.

3. Gasinjektionsvorrichtung (1) zum Einbringen eines Prozessgases in eine Nichteisen-Metallschmelze und/oder Schlacke, insbesondere eine Kupferschmelze und/oder Kupferschlacke, umfassend eine hohlzylindrische Lanze (2), die aus einem feuerfesten Werkstoff und/oder Graphit besteht, wobei die Lanze (2) eine Einlassöffnung (5) für das Prozessgas und ein mit der hohlzylindrischen Lanze (2) verbundenes sowie ein aus einem feuerfesten Werkstoff und/oder Graphit bestehendes Gasinjektionsmodul (9, 23, 27) mit zumindest einer Auslassöffnung (12) für das Prozessgas aufweist, wobei die Auslassöffnung (12) zumindest ein aus einem keramischen Material gebildetes durchströmbares Element (13) umfasst, über das das Prozessgas in die Schmelze einbringbar ist, wobei das keramische Material ausgewählt ist aus der Gruppe umfassend Siliziumcarbide, Siliziumnitride, Silizium-Aluminiumoxid-Nitride, Bornitride, Zirkonoxide, Titanoxide, Aluminiumtitanate und/oder Mischungen hiervon, und wobei das Gasinjektionsmodul (9) in Form eines Brausekopfs (23) ausgebildet ist und mehrere in Richtung der Einlassöffnung (5) ausgerichtete Auslassöffnungen (12) aufweist.

4. Gasinjektionsvorrichtung (1) nach Anspruch 3, wobei das aus dem keramischen Material gebildete durchströmbare Element (13) in Form einer Lochplatte (25) oder einer porösen Platte ausgebildet ist, die in die jeweiligen Auslassöffnungen (12) des Brausekopfs (23) eingesetzt und mit diesem fest verbunden sind.

5. Gasinjektionsvorrichtung (1) nach Anspruch 3 oder 4, wobei die Auslassöffnungen (12) derart angeordnet sind, dass ihre Längsachse (15) einen Winkel von 0° bis 45° in Bezug auf die Längsachse (16) der Lanze (2) aufweist.

6. Gasinjektionsvorrichtung (1) zum Einbringen eines Prozessgases in eine Nichteisen-Metallschmelze und/oder Schlacke, insbesondere eine Kupferschmelze und/oder Kupferschlacke, umfassend eine hohlzylindrische Lanze (2), die aus einem feuerfesten Werkstoff und/oder Graphit besteht, wobei die Lanze (2) eine Einlassöffnung (5) für das Prozessgas und ein mit der hohlzylindrischen Lanze (2) verbundenes sowie ein aus einem feuerfesten Werkstoff und/oder Graphit bestehendes Gasinjektionsmodul (9, 23, 27) mit zumindest einer Auslassöffnung (12) für das Prozessgas aufweist, wobei die Auslassöffnung (12) zumindest ein aus einem keramischen Material gebildetes durchströmbares Element (13) umfasst, über das das Prozessgas in die Schmelze einbringbar ist, wobei das keramische Material ausgewählt ist aus der Gruppe umfassend Siliziumcarbide, Siliziumnitride, Silizium-Aluminiumoxid-Nitride, Bornitride, Zirkonoxide, Titanoxide, Aluminiumtitanate und/oder Mischungen hiervon, und wobei das Gasinjektionsmodul (9) in Form eines Impellerrads (27) ausgebildet ist und die zumindest eine Auslassöffnung (12) zentrisch in dem Impellerrad (27) angeordnet ist.

7. Gasinjektionsvorrichtung (1) nach Anspruch 6, wobei das aus dem keramischen Material gebildete durchströmbare Element (13) in Form einer einseitig verschlossenen Hülse (30) ausgebildet ist, die in die zumindest eine Auslassöffnung (12) eingesetzt und mit dem Impellerrad (27) fest verbunden ist, wobei die Hülse (30) zumindest ein, vorzugsweise mehrere senkrecht zu ihrer Längsachse angeordnete Auslasskanäle (31) aufweist.

8. Gasinjektionsvorrichtung (1) nach Anspruch 6, wobei das aus dem keramischen Material gebildete durchströmbare Element (13) in Form einer zylindrischen Hülse (28) ausgebildet ist, die in die zumindest eine Auslassöffnung (12) eingesetzt und mit dem Impellerrad (27) fest verbunden ist.

9. Gasinjektionsvorrichtung (1) nach einem der vorhergehenden Ansprüche, wobei die hohlzylindrische Lanze (2) aus zumindest einem, vorzugsweise mehreren einzelnen, miteinander verbindbaren, hohlzylindrischen Lanzenkörpern (3) gebildet ist.

10. Anlage zur Gewinnung von Nichteisen-Metallen, insbesondere von Kupfer, umfassend eine Gasinjektionsvorrichtung (1) nach einem der vorhergehenden Ansprüche.

11. Anlage zur Aufbereitung, Reinigung und/oder Raffination von Nichteisen-Metallschlacken, insbesondere von Kupferschlacken, umfassend eine Gasinjektionsvorrichtung (1) nach einem der vorhergehenden Ansprüche 1 - 9.

12. Verwendung einer Gasinjektionsvorrichtung (1) nach einem der vorhergehenden Ansprüche 1 - 9 zur Gewinnung von Nichteisen-Metallen, insbesondere von Kupfer, oder zur Aufbereitung, Reinigung und/oder Raffination von Nichteisen-Metallschlacken, insbesondere von Kupferschlacken.

## Claims

1. Gas injection device (1) for introducing a process gas into a non-ferrous metal melt and/or slag, particularly a copper melt and/or copper slag, comprising a hollow cylindrical lance (2) which consists of a refractory material and/or graphite, wherein the lance (2) has an inlet opening (5) for the process gas and a gas injection module (9, 23, 27), which is connected with the hollow cylindrical lance (2) as well as consists of a refractory material and/or graphite, with at least one outlet opening (12) for the process gas, wherein the outlet opening (12) comprises at least one element (13) which is formed from a ceramic material and can be flowed through and by way of which the process gas is introducible into the melt, wherein the ceramic material is selected from the group comprising silicon carbide, silicon nitride, silicon aluminium-oxide nitride, boron nitride, zircon oxide, titanium oxide, aluminium titanate and/or mixtures thereof, wherein the gas injection module (9) is constructed to be pot-shaped and the at least one outlet opening (12), preferably several outlet openings (12), is or are arranged in a circumferential surface (11) of the gas injection module (9) of pot shaped construction, wherein the through-flowable element (13) formed from the ceramic material is constructed in the form of a nozzle (14) which is inserted into the at least one outlet opening (12) and fixedly connected with the gas injection module (9) and wherein the nozzle (14) is so arranged in the at least one outlet opening (12) that its longitudinal axis (15) has an angle of 45° to 80°, preferably an angle of 60° to 80°, with respect to the longitudinal axis (16) of the lance (2).

2. Gas injection device (1) according to claim 1, wherein the nozzle (14) is constructed as a Laval nozzle (14).

3. Gas injection device (2) for introduction of a process gas in an non-ferrous metal melt and/or slag, particularly a copper melt and/or copper slag, comprising a cylindrical lance (2) which consists of a refractory material and/or graphite, wherein the lance (2) has an inlet opening (5) for the process gas and a gas injection module (9, 23, 27), which is connected with the hollow cylindrical lance (2) as well as consists of a refractory material and/or graphite, with at least one outlet opening (12) for the process gas, wherein the outlet opening (12) comprises at least one element (13) which is formed from a ceramic material and can be flowed through and by way of which the process gas is introducible into the melt, wherein the ceramic material is selected from the group comprising silicon carbide, silicon nitride, silicon aluminium-oxide nitride, boron nitride, zircon oxide, titanium oxide, aluminium titanate and/or mixtures thereof and wherein the gas injection module (9) is constructed in the form of a spray head (23) and has several outlet openings (12) oriented in the direction of the inlet opening (5).

4. Gas injection device (1) according to claim 3, wherein the through-flowable element (13) formed from the ceramic material is constructed in the form of an apertured plate (25) or a porous plate, which is inserted into the respective outlet openings (12) of the spray head (23) and fixedly connected with the spray head.

5. Gas injection device (1) according to claim 3 or 4, wherein the outlet openings (12) are so arranged that the longitudinal axis (15) thereof has an angle of 0° to 45° with respect to the longitudinal axis (16) of the lance (2).

6. Gas injection device (1) for introducing a process gas into a non-ferrous metal melt and/or slag, particularly a copper melt and/or copper slag, comprising a hollow cylindrical lance (2) consists of a refractory material and/or graphite, wherein the lance (2) has an inlet opening (5) for the process gas and a gas injection module (9, 23, 27), which is connected with the hollow cylindrical lance (2) as well as consists of a refractory material and/or graphite, with at least one outlet opening (12) for the process gas, wherein the outlet opening (12) comprises at least one element (13) which is formed from a ceramic material and can be flowed through and by way of which the process gas is introducible into the melt, wherein the ceramic material is selected from the group comprising silicon carbide, silicon nitride, silicon aluminium-oxide nitride, boron nitride, zircon oxide, titanium oxide, aluminium titanate and/or mixtures thereof and wherein the gas injection module (9) is constructed in the form of a impeller wheel (27) and the at least one outlet opening (12) is arranged centrally in the impeller wheel (27).

7. Gas injection device (1) according to claim 6, wherein the through-flowable element (13) formed from the ceramic material is constructed in the form of a sleeve (30), which is closed at one end and is inserted into the at least one outlet opening (12) and which is fixedly connected with the impeller wheel (27), wherein the sleeve (30) has at least one outlet channel (31), preferably a plurality of outlet channels (31), arranged perpendicularly to the longitudinal axis of the sleeve.

8. Gas injection device (1) according to claim 6, wherein the through-flowable element (13) formed from the ceramic material is constructed in the form of a cylindrical sleeve (28) which is inserted into the at least one outlet opening (12) and fixedly connected with the impeller wheel (27).

9. Gas injection device (1) according to any one of the preceding claims, wherein the hollow cylindrical lance (2) is formed from at least one hollow cylindrical lance body (3), preferably a plurality of individual hollow cylindrical lance bodies (3) connectible together.

10. Plant for extracting non-ferrous metals, particularly copper, comprising a gas injection device (1) according to any one of the preceding claims.

11. Plant for preparing, purifying and/or refining non-ferrous metal slags, particularly copper slags, comprising a gas injection device (1) according to any one of the preceding claims 1 to 9.

12. Use of a gas injection device (1) according to any one of claims 1 to 9 for extracting non-ferrous metals, particularly copper, or for preparing, purifying and/or refining non-ferrous metal slags, particularly copper slags.

## Revendications

1. Un dispositif d'injection de gaz (1) permettant d'introduire un gaz de traitement dans un métal fondu non ferreux et/ou des scories, en particulier une masse fondue de cuivre et/ou des scories de cuivre, comprenant une lance cylindrique creuse (2) qui est constituée d'un matériau réfractaire et/ou de graphite, la lance (2) comportant une ouverture d'entrée (5) pour le gaz de traitement et un module d'injection de gaz (9, 23, 27) relié à la lance cylindrique creuse (2) et constitué d'un matériau réfractaire et/ou de graphite, avec au moins une ouverture de sortie (12) pour le gaz de traitement, l'ouverture de sortie (12) comprenant au moins un élément perméable (13), formé d'un matériau céramique, par lequel le gaz de traitement peut être introduit dans la masse fondue, dans lequel le matériau céramique est sélectionné dans le groupe comprenant les carbures de silicium, les nitrures de silicium, les nitrures d'oxyde d'aluminium et de silicium, les nitrures de bore, les oxydes de zirconium, les oxydes de titane, les titanates d'aluminium et/ou des mélanges de ceux-ci, dans lequel le module d'injection de gaz (9) est réalisé en forme de pot et lesdites au moins une, de préférence plusieurs ouvertures de sortie (12) sont disposées sur une surface d'enveloppe (11) du module d'injection de gaz (9) réalisé en forme de pot, dans lequel l'élément perméable (13) formé d'un matériau céramique est réalisé sous la forme d'une buse (14) qui est insérée dans ladite au moins une ouverture de sortie (12) et qui est reliée de manière fixe au module d'injection de gaz (9), et dans lequel la buse (14) est disposée dans ladite au moins une ouverture de sortie (12) de telle sorte que son axe longitudinal (15) présente un angle de 45° à 80° par rapport à l'axe longitudinal (16) de la lance (2), de préférence un angle de 60° à 80°.

2. Dispositif d'injection de gaz (1) selon la revendication 1, dans lequel la buse (14) est conçue comme une buse de Laval (14).

3. Dispositif d'injection de gaz (1) permettant d'introduire un gaz de traitement dans un métal fondu non ferreux et/ou des scories, en particulier une masse fondue de cuivre et/ou des scories de cuivre, comprenant une lance cylindrique creuse (2) qui est constituée d'un matériau réfractaire et/ou de graphite, la lance (2) comportant une ouverture d'entrée (5) pour le gaz de traitement et un module d'injection de gaz (9, 23, 27) relié à la lance cylindrique creuse (2) et constitué d'un matériau réfractaire et/ou de graphite, avec au moins une ouverture de sortie (12) pour le gaz de traitement, l'ouverture de sortie (12) comprenant au moins un élément perméable (13), formé d'un matériau céramique, par lequel le gaz de traitement peut être introduit dans la masse fondue, dans lequel le matériau céramique est sélectionné dans le groupe comprenant les carbures de silicium, les nitrures de silicium, les nitrures d'oxyde d'aluminium et de silicium, les nitrures de bore, les oxydes de zirconium, les oxydes de titane, les titanates d'aluminium et/ou des mélanges de ceux-ci, et dans lequel le module d'injection de gaz (9) est conçu sous la forme d'une pomme de douche (23) et comporte une pluralité d'ouvertures de sortie (12) orientées vers l'ouverture d'entrée (5).

4. Dispositif d'injection de gaz (1) selon la revendication 3, dans lequel l'élément perméable (13) formé d'un matériau céramique est conçu sous la forme d'une plaque perforée (25) ou d'une plaque poreuse, qui sont insérées dans les ouvertures de sortie (12) respectives de la pomme de douche (23) et sont reliées de manière fixe à celle-ci.

5. Dispositif d'injection de gaz (1) selon la revendication 3 ou 4, dans lequel les ouvertures de sortie (12) sont disposées de telle sorte que leur axe longitudinal (15) présente un angle compris entre 0° et 45° par rapport à l'axe longitudinal (16) de la lance (2).

6. Dispositif d'injection de gaz (1) permettant d'introduire un gaz de traitement dans un métal fondu non ferreux et/ou des scories, en particulier une masse fondue de cuivre et/ou des scories de cuivre, comprenant une lance cylindrique creuse (2) qui est constituée d'un matériau réfractaire et/ou de graphite, la lance (2) comportant une ouverture d'entrée (5) pour le gaz de traitement et un module d'injection de gaz (9, 23, 27) relié à la lance cylindrique creuse (2) et constitué d'un matériau réfractaire et/ou de graphite, avec au moins une ouverture de sortie (12) pour le gaz de traitement, l'ouverture de sortie (12) comprenant au moins un élément perméable (13), formé d'un matériau céramique, par lequel le gaz de traitement peut être introduit dans la masse fondue, dans lequel le matériau céramique est sélectionné dans le groupe comprenant les carbures de silicium, les nitrures de silicium, les nitrures d'oxyde d'aluminium et de silicium, les nitrures de bore, les oxydes de zirconium, les oxydes de titane, les titanates d'aluminium et/ou des mélanges de ceux-ci, et dans lequel le module d'injection de gaz (9) est réalisé sous la forme d'une roue à aubes (27) et ladite au moins une ouverture de sortie (12) est disposée de manière centrée dans la roue à aubes (27).

7. Dispositif d'injection de gaz (1) selon la revendication 6, dans lequel l'élément perméable (13) formé d'un matériau céramique est conçu sous la forme d'une douille (30) fermée d'un côté, qui est insérée dans ladite au moins une ouverture de sortie (12) et est reliée de manière fixe à la roue à aubes (27), la douille (30) comportant au moins un, de préférence plusieurs canaux de sortie (31) disposés perpendiculairement à son axe longitudinal.

8. Dispositif d'injection de gaz (1) selon la revendication 6, dans lequel l'élément perméable (13) formé d'un matériau céramique est conçu sous la forme d'un manchon cylindrique (28), qui est inséré dans ladite au moins une ouverture de sortie (12) et est relié de manière fixe à la roue à aubes (27).

9. Dispositif d'injection de gaz (1) selon l'une quelconque des revendications précédentes, dans lequel la lance cylindrique creuse (2) est formée d'au moins un, de préférence de plusieurs corps de lance cylindriques et creux (3) individuels, pouvant être reliés entre eux.

10. Installation pour l'extraction de métaux non ferreux, notamment de cuivre, comprenant un dispositif d'injection de gaz (1) selon l'une quelconque des revendications précédentes.

11. Installation pour le traitement, la purification et/ou l'affinage de scories de métaux non ferreux, notamment de scories de cuivre, comprenant un dispositif d'injection de gaz (1) selon l'une quelconque des revendications précédentes 1 à 9.

12. Utilisation d'un dispositif d'injection de gaz (1) selon l'une quelconque des revendications précédentes 1 à 9 pour l'extraction de métaux non ferreux, notamment de cuivre, ou pour le traitement, la purification et/ou l'affinage de scories de métaux non ferreux, notamment de scories de cuivre.
